# EUROPEAN PATENT SPECIFICATION

(11) **EP 1 232 908 B1**
(45) Date of publication and mention of the grant of the patent: **11.06.2008**
(21) Application number: 02075668.0
(22) Date of filing: 19.02.2002
(51) Int. Cl.: B60P 3/34

(54) **Camping trailer**
Camping-Anhänger
Remorque de camping

(30) Priority: 19.02.2001 NL 1017395
(43) Date of publication of application: 21.08.2002
(73) Proprietor: Holtkamp, Egbert Berend, 9561 JA Ter Apel (NL)
(72) Inventor: Holtkamp, Egbert Berend, 9561 JA Ter Apel (NL)
(74) Representative: Prins, Adrianus Willem

(56) References cited:
- WO-A-86/01780
- DE-B- 1 195 617
- FR-A- 2 440 307
- FR-A- 2 629 401
- US-A- 4 452 465
- US-A- 5 050 927
- US-A- 5 108 144
- US-A- 5 387 002

## Description

The invention relates to a trailer camping device for use in combination with a car with towing hook, the trailer camping device being provided with a set of wheels and a shaft for coupling with the towing hook, as well as with a foldable upper part for forming, in an unfolded condition, a camping accommodation. A device of that kind is known from FR 2 629 401.

Such trailer camping devices have already been known per se for a long time in the form of folding trailers and caravans. Such folding trailers and caravans form completely independent residence spaces, which are not in communication with the interior of the towing vehicle. Additionally, there are campers where the camping residence space, apart from possible front tents and such, is located entirely within the towing vehicle. A drawback of such campers is that they are relatively expensive and not suitable for daily use. Therefore, campers enlarge the fleet of cars, take up extra space and are a burden to the environment.

The object of the invention is to provide a camping device which stands midway between a folding trailer and a camper. To this end, according to the invention, a camping device of the above-described type is characterized in that the foldable upper part in unfolded condition can be coupled via coupling means to the body work of a car so as to form an integral unit therewith in a manner such, that the interior of the car is accessible from the unfolded camping device.

It is noted that from the French patent application 2629401, a camping device is known comprising a folding trailer which can be coupled to a car with a towing hook. The folding trailer is designed such, that, in unfolded condition, it can be coupled to a fold-out cabin mounted on the roof of the car. In operative condition, the fold-out cabin forms a sleeping place which is accessible via a ladder mounted on the rear side of the car. However, the inner space of the car is not accessible from the camping device.

Further, from the German Auslegeschrift 1195617, a caravan is known which can be connected to the rear side of a car of the "estate car" or "station wagon"-type via a bellows construction. However, what is involved here is not a camping device of the type where a camping accommodation is realized only when the upper part has been unfolded.

In the following, the invention will be further elucidated with reference to the accompanying drawing of a number of exemplary embodiments.
Fig. 1 schematically shows an example of a car with towing hook and a trailer camping device coupled thereto;
Fig. 2 schematically shows the combination of Fig. 1 in unfolded condition;
Fig. 3 schematically shows an example of a variant of Fig. 1;
Fig. 4 schematically shows the combination of Fig. 3 in unfolded condition;
Fig. 5 schematically shows an example of another embodiment of a trailer camping device according to the invention;
Fig. 6 schematically shows an example of an embodiment of an upper part of a camping device according to the invention; and
Fig. 7 schematically shows still another example of a camping device according to the invention suitable for coupling with a device mounted on the towing hook of a car.

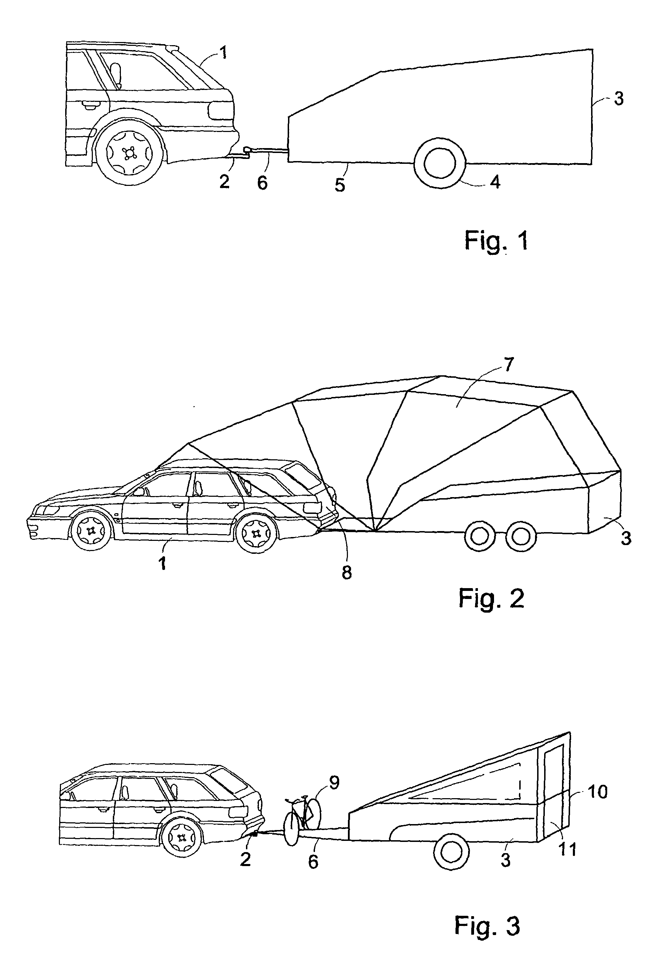

Fig. 1 schematically shows a car 1 with a towing hook 2 and a trailer camping device 3 with a set of wheels 4. The trailer camping device has a bottom plate 5 which is self-supporting or can be mounted onto a substructure, and, further, a shaft 6 for coupling with the towing hook 2 of the car 1. In the trailer camping device a caravan interior is present. The trailer camping device 3 is foldable and can, for instance, be unfolded to the form shown in Fig. 2 and, in this case, be folded over the car for forming a camping accommodation 7. The camping accommodation is in communication with the interior of the car via the rear door or tailgate 8 of the car. The rear door or tailgate can remain open with the camping device in the unfolded condition.

The camping accommodation has roof and wall surfaces which can consist wholly or partly of rigid panels, for instance sandwich panels, which are mounted in a hinging and/or sliding manner. Also, for at least a number of surfaces, tent cloth can be used which is stretched on a tube frame or the like and/or is supported by a tube frame.

Fig. 3 schematically shows a different example of a trailer camping device according to the invention. In this example, the trailer camping device has a lengthened shaft 6, on which, during the trip, luggage can be transported. As an example, a bicycle 9 is shown.

In this example, in the transport condition, the trailer camping device itself is approximately wedge-shaped with a relatively high back wall 10, accommodating an entrance door 11.

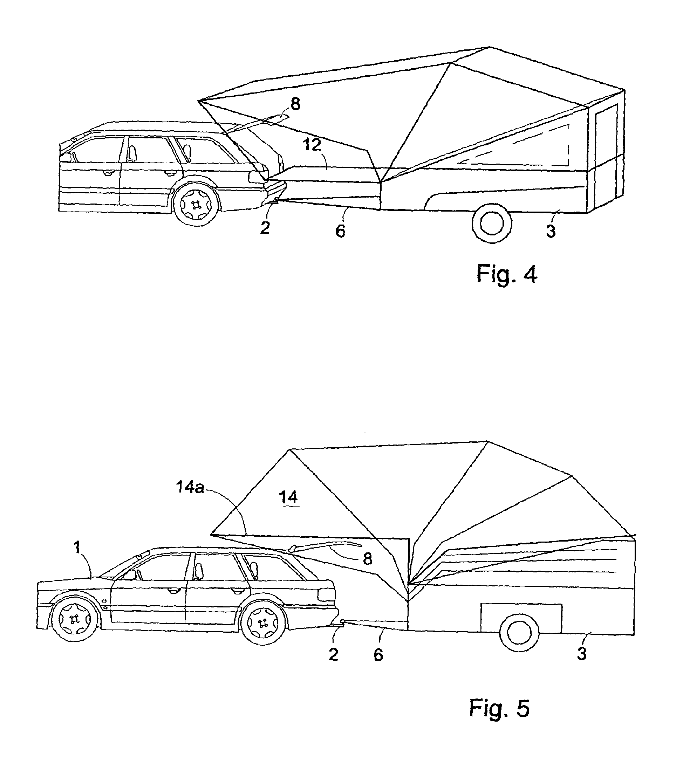

Fig. 4 shows the combination of Fig. 3 with the trailer camping device in unfolded condition. Connection to the outer wall of the car can be effected with the aid of flaps, pulling cords, sleeves or the like (not shown). In this example, above the shaft, a bottom plate 12 is present which has been unfolded, extended or otherwise fitted.

Fig. 5 shows another exemplary embodiment wherein, in unfolded condition, the trailer camping device reaches above the towing vehicle 1 for forming, for instance, a sleeping compartment 14. Preferably, the bottom plate 14a of this compartment consists at least partly of the folded-over upper wall (the lid) of the trailer camping device 3. The side walls and the roof can be made of cloth in a similar manner as is the case with folding trailers. The walls and the roof can also, at least partly, be formed of rigid panels. The side walls of the trailer camping device can comprise, for instance, forward slideable panels or, for instance, at the location of the bottom plate, rolled-up walls of cloth which can be rolled down. Further, for connection to the body work of the car, a sealing sleeve (not shown) can be used.

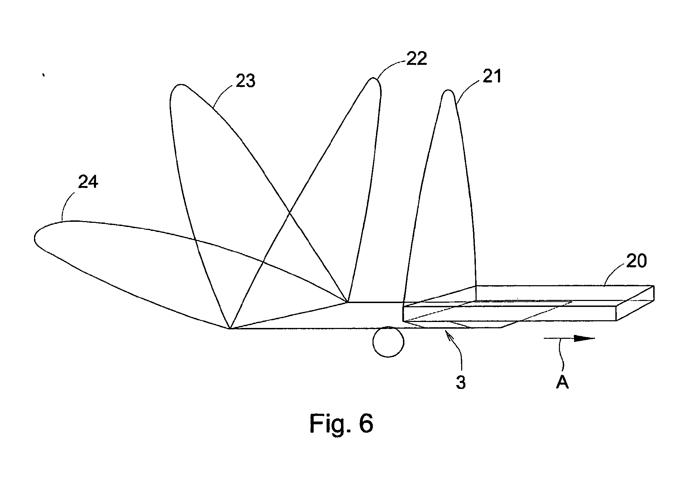

Fig. 6 schematically shows an exemplary embodiment of a trailer camping device 3 which, in condition of rest, has the shape of a flat box 20. In the box are a number of foldable ribs 21 to 24 supporting a tent cloth (not shown). Preferably, the flat box together with at least one rib can be slid backwards (arrow A) so that a greater length becomes available. Also, the tent cloth is thereby stretched as well.

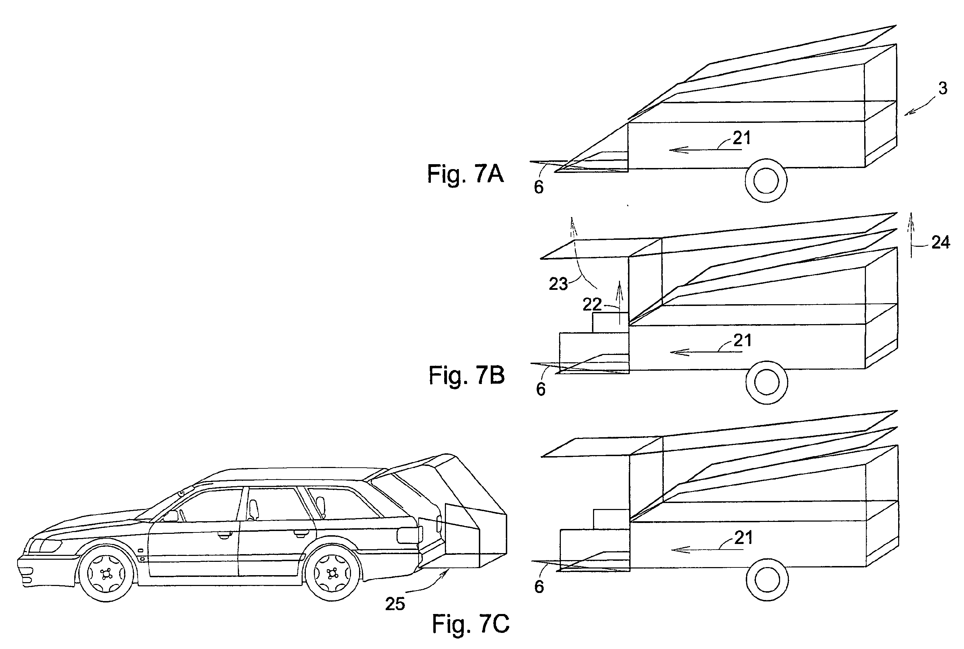

Fig. 7 schematically shows a trailer camping device 3 with a number of rigid, foldable and slideable panels, as is indicated with arrows 20 to 24 in Figs. 7a to 7c. In Fig. 7, it is schematically shown how a trailer camping device can be coupled to a car, which is provided at the rear side with a device 25 with a number of foldable walls. Preferably, the device 25 is designed such, that it can be mounted with the aid of the towing hook. Such a device is described in, for instance, the Dutch patent application 1017394. Advantageously, the trailer camping devices can be designed such that unfolding or sliding out, or folding in or folding or sliding back, respectively, is done pneumatically or hydraulically.

## Claims

1. A trailer camping device for use in combination with a car (1) with towing hook (2), wherein the trailer camping device (3) is provided with a set of wheels (4) and a shaft (6) for coupling with a towing hook, as well as with a foldable upper part for forming, in an unfolded condition, a camping accommodation (7), **characterized in that** the foldable upper part in the unfolded condition can be coupled via coupling means to the body work of a car (1) to form an integral unit therewith such, that the interior of the car (1) is accessible from the unfolded camping device (3).

2. A camping trailer device according to claim 1, **characterized in that** in unfolded condition, the foldable upper part reaches at least partly above the roof of the car (1).

3. A trailer camping device according to claim 1 or 2, **characterized in that** the coupling means comprise a connecting sleeve.

4. A trailer camping device according to any one of the preceding claims, **characterized in that** the trailer camping device (3) comprises a number of panels adapted to be slid out.

5. A trailer camping device according to any one of the preceding claims, **characterized in that** the trailer camping device (3) comprises a bottom plate part (12) which, in the camping position, can be placed above the shaft (6).

6. A trailer camping device according to any one of the preceding claims, **characterized in that** the trailer camping device (3) comprises a box-shaped part (20) which can be slid backwards, in which the foldable upper part is received.

7. A trailer camping device according to any one of the preceding claims, **characterized in that** the foldable upper part comprises a number of foldable ribs (21-24) which, in operative condition, support a tent cloth.

8. A trailer camping device according to any one of the preceding claims, arranged for connection to a compartment (25) mounted at the rear side of the car, which compartment can be folded and unfolded.

## Patentansprüche

1. Campinganhänger zur Verwendung in Kombination mit einem Fahrzeug (1) mit Zughaken (2), wobei der Campinganhänger (3) mit einem Satz Räder (4) und einer Deichsel (6) zur Ankopplung an einem Zughaken und mit einem zusammenfaltbaren oberen Teil versehen ist, der in entfaltetem Zustand eine Camping-Unterkunft (7) bildet, **dadurch gekennzeichnet, dass** der faltbare obere Teil in nicht entfaltetem Zustand mittels Kuppelmitteln mit dem Aufbau des Fahrzeuges (1) verbindbar ist, um damit eine integrale Einheit derart zu bilden, dass das Innere des Fahrzeuges (1) von dem entfalteten Campinganhänger (3) aus zugänglich ist.

2. Campinganhänger nach Anspruch 1, **dadurch gekennzeichnet, dass** im nicht entfalteten Zustand der faltbare obere Teil wenigstens teilweise über das Dach des Fahrzeuges (1) reicht.

3. Campinganhänger nach Anspruch 1 oder 2, **dadurch gekennzeichnet, dass** die Kuppelmittel eine Kuppelhülse umfassen.

4. Campinganhänger nach einem der vorangehenden Ansprüche, **dadurch gekennzeichnet, dass** der Campinganhänger (3) eine Anzahl von ausschiebbaren Platten umfasst.

5. Campinganhänger nach einem der vorangehenden Ansprüche, **dadurch gekennzeichnet, dass** der Campinganhänger (3) eine Bodenplatten (12) umfasst, die in der Campingstellung oberhalb der Deichsel (6) angeordnet werden kann.

6. Campinganhänger nach einem der vorangehenden Ansprüche, **dadurch gekennzeichnet, dass** der Campinganhänger (3) einen kastenförmigen Teil (20) umfasst, der nach rückwärts verschoben werden kann und der den faltbaren oberen Teil aufnimmt.

7. Campinganhänger nach einem der vorangehenden Ansprüche, **dadurch gekennzeichnet, dass** der faltbare obere Teil eine Anzahl von faltbaren Rippen (21-24) umfasst, die in der Betriebsstellung eine Zeltleinwand tragen.

8. Campinganhänger nach einem der vorangehenden Ansprüche, welcher mit einem an der Rückseite des Fahrzeugs angebrachten faltbaren und entfaltbaren Abteil (25) verbindbar ist.

## Revendications

1. Système de remorque de camping destiné à être utilisé avec une voiture (1) avec crochet de remorquage (2), le système de remorque de camping (3) étant pourvu d'un jeu de roues (4) et d'un timon (6) pour l'accouplement avec un crochet de remorquage, ainsi que d'une partie supérieure repliable pour procurer, dans l'état déplié, un logement de camping (7) **caractérisé en ce que** la partie supérieure repliable peut être accouplé à l'état déplié, au moyen d'éléments de couplage, à la carrosserie d'une voiture (1) pour former une unité intégrale avec celle-ci de sorte que l'intérieur de la voiture (1) soit accessible depuis le système de camping déplié (3).

2. Système de remorque de camping selon la revendication 1, **caractérisé en ce qu'**à l'état déplié, la partie supérieure repliable parvient, au moins en partie, au-dessus du toit de la voiture (1).

3. Système de remorque de camping selon la revendication 1 ou 2, **caractérisé en ce que** les moyens de couplage sont constitués par un manchon de couplage.

4. Système de remorque de camping selon l'une quelconque des revendications précédentes, **caractérisé en ce que** le système de remorque de camping (3) est constitué d'un nombre de panneaux adaptés pour être télescopiques.

5. Système de remorque de camping selon l'une quelconque des revendications précédentes, **caractérisé en ce que** le système de remorque de camping (3) comporte une partie de plancher plate (12) qui, en position de camping, peut être placée au-dessus du timon (6).

6. Système de remorque de camping selon l'une quelconque des revendications précédentes, **caractérisé en ce que** le système de remorque de camping (3) comporte une partie en forme de boîte (20) qui peut être coulissée vers l'arrière, dans laquelle la partie supérieure repliable est logée.

7. Système de remorque de camping selon l'une quelconque des revendications précédentes, **caractérisé en ce que** la partie supérieure repliable comporte des membrures repliables (21-24) qui, en position de camping, supportent une toile de tente.

8. Système de remorque de camping selon l'une quelconque des revendications précédentes, aménagé pour être relié à un compartiment (25) monté à l'arrière de la voiture, lequel compartiment peut être plié et déplié.
